# EUROPÄISCHE PATENTSCHRIFT

(11) **EP 2 238 821 B1**
(45) Veröffentlichungstag und Bekanntmachung des Hinweises auf die Patenterteilung: **21.12.2011**
(21) Anmeldenummer: 10003771.2
(22) Anmeldetag: 08.04.2010
(51) Int. Cl.: A01D 27/00, A01D 23/00, A01D 23/02, A01D 23/06

(54) **Rübenerntemaschine**
Beet harvester
Machine de récolte pour tubercules

(30) Priorität: 08.04.2009 DE 102009016621
(43) Veröffentlichungstag der Anmeldung: 13.10.2010
(73) Patentinhaber: Grimme Landmaschinenfabrik GmbH & Co. KG, 49401 Damme (DE)
(72) Erfinder: Kalverkamp, Klemens, 49401 Damme (DE)
(74) Vertreter: Wischmeyer, André

(56) Entgegenhaltungen:
- DE-A1- 2 647 264
- FR-A1- 2 329 179
- GB-A- 2 118 013

## Beschreibung

Die Erfindung betrifft eine Rübenerntemaschine, insbesondere in Form einer selbstfahrenden Vollerntemaschine, gemäß dem Oberbegriff des Anspruchs 1.

Aus DE 26 47 264 ist eine mit Blatthäcksler, Putzvorrichtung, Nachköpfer und Roder versehene Anbaugruppe als für einen Schlepper o. dgl. Antriebsbaugruppe konzipierte Ernteeinheit bekannt. Dabei weist der Blatthäcksler am Rübenkopf in Fahrtrichtung drehende Werkzeuge auf, und diese Werkzeuge wirken in einem sich überschneidenden Arbeitskreis mit sich entgegen der Fahrtrichtung drehenden Werkzeugen der Putzvorrichtung zusammen. Dabei wird zusätzlich zur Ausförderung des Rübenblätter-Stromes mittels des Blatthäckslers ein zum Ackerboden bzw. Nachköpfer gerichteter zweiter Förderstrom erzeugt und der Bereich des Nachköpfers nachteilig beeinflusst. Dabei werden vom Blatthäcksler, vom Putzer und vom Nachköpfer jeweilige einzelne Förderströme innerhalb einer Gerätegruppe erzeugt, die endseitig zusätzliche Querförderer zum Legen der Rübenschwade aufweist.

Bekannt sind auch weitere Ausführungen von separaten Anbauaggregaten in Form von Häcksel- und Köpfvorrichtungen, die als Hilfsvorrichtungen für die bei Hackfrüchten eingesetzte Erntetechnologie verwendet werden. In DE 28 34 463 sind ein rotierende Werkzeuge aufweisender Blatthäcksler und ein mit einem Nachköpfer zusammenwirkender Schlegelhäcksler in einem gemeinsamen Gehäuse angeordnet. Diese als separate Köpfvorrichtung von einem Schlepper o. dgl. Zugmaschine bewegbare Baugruppe ist so ausgebildet, dass sowohl die Rübenblätter als auch die abgetrennten Kopfscheiben in einen oberhalb der beiden Werkzeuge befindlichen Querförderer bzw. eine Austragsvorrichtung einleitbar sind. Bei dieser Hilfsvorrichtung werden von den Werkzeugen zwei einzeln ableitbare Förderströme erzeugt. Diese beiden Förderströme bewirken jedoch, dass Teile des Häckselgutes auch auf den Ackerboden gefördert werden oder unmittelbar in den Bereich des Köpfmessers gelangen können, so dass dessen Funktion nachteilig beeinflusst wird.

In RU 736904 ist eine Blattschläger-Baugruppe mit einem am Rübenkopf bzw. Rübenblatt entgegen der Fahrtrichtung drehenden Blatthäcksler vorgesehen, von dem in einem ersten Förderstrom das Rübenblatt einer Austrageinrichtung zugeführt wird. Diese Austrageinrichtung ist dabei so angeordnet, dass von dieser auch im Bereich eines bodenseitigen Nachköpfers erzeugte Kopfscheiben mittels eines zweiten Förderstroms aufnehmbar sind. Bei einer ähnlichen Konstruktion gemäß RU 965381 werden die Pflanzenteile einem Förderband zugeführt, und in DE 31 51 484 wird eine tellerförmige Köpfscheibe eingesetzt, über der ein die abgetrennten Teile seitlich ausfördernder Blattschläger wirksam ist.

Gemäß DE 34 24 077 ist eine ebenfalls als Hilfsaggregat vorgesehene Köpfvorrichtung vorgeschlagen, mit der im Bereich eines entgegen der Fahrtrichtung drehenden Blatthäckslers abgetrennte Rübenblätter in einem ersten Förderstrom zu einem Querförderer gelangen und hier gesammelt werden. Dabei ist zusätzlich ein Schleudergerät vorgesehen, das im Bereich des Blatthäckslers über diesem angeordnet ist. In Fahrtrichtung rückseitig sind mit diesem Schleudergerät jeweilige in Fahrtrichtung drehende Auswurfscheiben verbunden, mit denen von einem Nachköpfer übernommene Kopfscheiben erfasst werden und auch diese Pflanzenteile in einem zweiten Förderstrom in den Bereich des Schleudergerätes bzw. des Querförderers einleitbar sind.

In EP 0 430 779 B1 wird eine einen Blatthäcksler und eine Putzvorrichtung aufweisende Konstruktion als separates Hilfsaggregat vorgeschlagen, wobei sich die Werkzeuge der beiden Baugruppen in ihrer jeweiligen Wirkphase am Rübenkopf gleichsinnig in Fahrtrichtung drehen. Damit werden die Rüben zuerst vom Rübenblatt befreit und dann mit dem zweiten Werkzeug im Bereich der oberseitigen Kopfscheibe in nur einem Teilbereich geputzt, derart, dass nur für diesen Bereich eine entsprechend gesäuberte Wirkfläche für den nachfolgenden Nachköpfer erreichbar ist. Mit diesem - zwei in derselben Richtung drehende Rotoren aufweisenden - System werden zwar die Blattabfälle zwischen die Pflanzenreihen befördert, da jedoch dabei auch Restteile auf die bereits gesäuberten Rübenköpfe gelangen, ist der Nachköpfer nachteiligen Verschleißbelastungen ausgesetzt. Die am Rübenkopf auf einer vom Putzer nicht erfassten Teilfläche verbleibenden Pflanzenreste sind in jedem Fall durch den Nachköpfer zu entfernen, um das unabhängig von dieser Hilfsvorrichtung in einer zweiten Erntephase nachfolgende Roden vorzubereiten.

Eine ähnliche Hilfs-Konstruktion mit zwei in der Wirkphase am Rübenkopf gleichsinnig in Fahrtrichtung wirkenden Häcksel- bzw. Putzrotoren ist in US 3,583,136 gezeigt, wobei ebenfalls die vorbeschriebenen Nachteile durch Verschmutzung für den außerhalb des Aggregats befindlichen Nachköpfer vorliegen, mittels der am Rübenkopf gleichsinnig wirkenden Rotoren nur eine "einseitige" Säuberung erfolgt und Pflanzenreste, Blattstängel o. dgl. Teile mittels des Nachköpfers zu beseitigen sind. In FR 2329179 und FR 2622764 sind weitere, den vorbeschriebenen Konstruktionen ähnliche Ausführungen von vor dem eigentlichen Rodevorgang separat anzuwendenden Zusatzaggregaten dargestellt, wobei die Konstruktion gemäß FR 2329179 nur einen in der Wirkphase am Rübenkopf in Fahrtrichtung drehenden Blatthäcksler aufweist, von dem aus das Häckselgut in einem ersten Teil-Förderstrom einem Ausförderer übergeben wird. Dieser als Sammeleinheit wirkenden, groß bauenden Baugruppe nachgeordnet ist im Bereich einer zusätzlichen Antriebsbaugruppe ein in der Wirkphase am Rübenkopf entgegen der Fahrtrichtung drehender Putzer vorgesehen, mit dem verbleibendes Rest-Rübenblatt in einem zweiten Teil-Förderstrom entfernbar ist. Entsprechend der Drehrichtung dieser zweiten Baugruppe werden die Pflanzenreste nur einseitig entfernt und auf die zuvor gesäuberten Rübenköpfe geschleudert, so dass neben den vom Rübenkopf zu entfernenden Pflanzenresten zusätzlich nachteilige Schnittbedingungen für den Nachköpfer entstehen können.

Gemäß GB-A-2118013 ist eine Vorrichtung zum Köpfen von Wurzelfrüchten vorgesehen, wobei ein Blatthäcksler mittels Schlegel einen ersten Blatt-Förderstrom erzeugt und danach ein spezielle Schneiden aufweisender Putzer einen zweiten Förderstrom bildet.

Bekannt ist auch ein als Anbauaggregat für einen Schlepper o. dgl. Antriebsmaschine vorgesehener Blattmulcher, wobei in dieser ebenfalls als "Erntehelfer" konzipierten Konstruktion eine Häckselbaugruppe mit zwei nachgeordneten Putzwellen vorgesehen ist, so dass eine nachteilig groß bauende Einheit gebildet ist und deren Anwendung damit auf das Konzept eines zusätzlich an einen Schlepper o. dgl. gekoppelten Anbauaggregates beschränkt bleibt (Prospekt Firma Grimme 09/07; BM 330/300).

Die Erfindung befasst sich mit dem Problem, eine Rübenerntemaschine zu schaffen, die im Bereich ihres kompakten Häcksel- und Rodeaggregats mit geringem Aufwand eine Verbesserung des Säuberungszustandes von Rübenköpfen ermöglicht, dabei eine weitgehend vollständige Verwertung des Pflanzenblattes zulässt und mit optimal vorbereitetem Rodevorgang eine Ertragssteigerung bewirkt.

Die Erfindung löst diese Aufgabe mit einer Rübenerntemaschine mit den Merkmalen des Anspruchs 1. Weitere Ausgestaltungen der erfindungsgemäßen Konstruktion ergeben sich aus den Ansprüchen 2 bis 32.

Die vorzugsweise als Vollerntemaschine ausgebildete Rübenerntemaschine weist in erfindungsgemäßer Ausführung ein Rodeaggregat auf, in das als funktionale Einheit ein als Zwei-Rotoren-Baugruppe ausgebildetes Häcksel-Putz-System integriert ist. Dessen auf parallelen Wellen rotierende Schlag- und Putzwerkzeuge sind in ihren jeweiligen am Erntegut bzw. dem Rübenblatt definierbaren Wirkphasen so ausgerichtet, geführt und angetrieben, dass für einen nachfolgenden Rodevorgang vollständig gesäuberte Rübenköpfe erzeugt werden. Damit wird die noch im Boden befindliche und vom Rübenblatt befreite Rübe mit "kahlem" Rübenkopf als eine komplett verwertbare Speicherknolle für den Rodevorgang und die Übergabe in die Maschine bereitgestellt.

Prinzipiell kann damit der an sich bekannte Nachköpfer eingespart und eine weitgehend verlustfreie Ernte erreicht werden. Gleichzeitig weisen die noch "vollständigen Rüben" keine Schnittflächen auf, so dass beim Putzvorgang nach dem Roden Beschädigungen der Schnittzone vermeidbar und die ohne Zuckerverluste transportierbaren Rüben auch bei der Lagerhaltung weniger fäulnisanfällig sind. Ausgehend von der Vielzahl der im Stand der Technik zitierten Häcksel-, Putz- und Schneidbaugruppen ist mit dem erfindungsgemäßen Konzept eine vergleichsweise einfache Kombination verwirklicht, deren Anwendung mit den nur zwei in ihrer Wirkphase am Rübenkopf gegensinnig drehenden sowie dabei nur einen gemeinsamen Förderstrom aufbauenden Rotoren zu überraschenden Effekten führt. Vorteilhaft ist vor allem, dass mit den beiden an sich bekannten Blatthäcksler- und Nachputzer-Rotoren der zwischen diesen verlaufende vertikale Förderstrom aus gezielt zusammengeführten Teilströmen aufgebaut ist. Damit kann erstmals auch ein von den beiden Rotoren in der Wirkphase weitgehend "verwirbelungsfrei" erzeugter Strömungsdruck genutzt und dieser sowohl in eine optimale Säuberung als auch variable Ableitungsvarianten umgesetzt werden.

In dem kompakten und weitgehend geschlossenen System werden mit den beiden Rotoren zwei gegenläufige Zwangs-Drehrichtungen definiert, auf deren Grundlage die Rübenköpfe nunmehr in zwei an Teilflächen wirksamen "Reinigungsphasen" mit den nur zwei Werkzeug-Gruppen bearbeitet werden. Dabei wird eine jeweils schonende Trennphase an den Rüben wirksam, so dass beschädigungsfreie und "blanke" Rübenköpfe erzeugt sind, das bisher übliche Entfernen der Kopfscheibe entbehrlich ist und damit die jeweils komplette Rübe verlustfrei gerodet werden kann.

Für eine optimale Ausleitung - die wahlweise zum Verteilen, Sammeln und Weiterverwerten vorgesehen ist - der abgetragenen Pflanzenteile aus der kompakten

Zwei-Rotoren-Einheit können unterschiedliche Konzepte genutzt werden, wobei ausgehend von dem einzigen zentralen Förderstrom sowohl eine Ablage von Förderstrom-Teilen zwischen den Rübenreihen als auch eine teilweise oder vollständige Einförderung des Förderstroms in einen entsprechenden mit der Einheit verbindbaren Austragteil mit anschließendem Sammelbehälter denkbar ist.

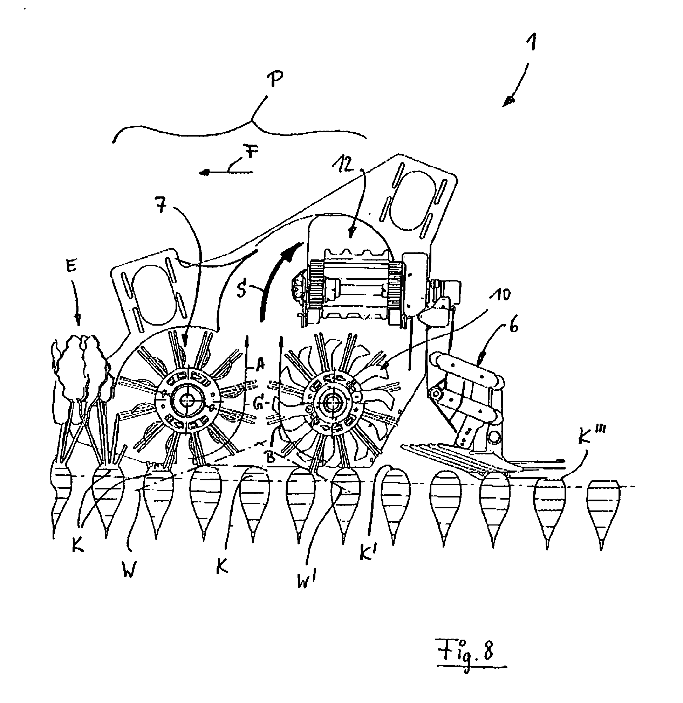

Weitere Einzelheiten und vorteilhafte Ausgestaltungen der Erfindung ergeben sich aus der nachfolgenden Beschreibung und der Zeichnung, in der mehrere Ausführungsbeispiele der erfindungsgemäßen Rübenemtemaschine mit Zwei-Rotoren-Einheit näher veranschaulicht sind, wobei Figuren 8-14 keine Ansführungs- beispiele der Erfindung zeigen . In der Zeichnung zeigen:
- Fig. 1: eine teilweise geschnittene Seitenansicht einer insbesondere als Vollerntemaschine ausgebildeten Rübenerntemaschine mit einer dem Rodevorgang vorgelagerten Bearbeitungsphase des Rüben- kopfes,
- Fig. 2: eine Seitenansicht ähnlich Fig. 1 mit oberhalb der Häcksel-Bau- gruppe vorgesehener Ausfördereinheit,
- Fig. 3: eine Vorderansicht auf das System gemäß Fig. 2,
- Fig. 4: eine Seitenansicht ähnlich Fig. 1 mit einer allgemeinen Darstellung der Ausfördereinheit,
- Fig. 5: eine Seitenansicht ähnlich Fig. 4 mit einer zweiten Ausführung der Ausfördereinheit,
- Fig. 6: eine Draufsicht auf das System gemäß Fig. 1 mit der seitlichen Aus- fördereinheit in Form einer Förderschnecke,
- Fig. 7: eine Draufsicht ähnlich Fig. 6 mit einem Bandförderer,
- Fig. 8: eine Seitenansicht ähnlich Fig. 1 mit einer die Häcksel-Baugruppe ergänzenden Nachköpfeinheit,
- Fig. 9: eine Seitenansicht ähnlich Fig. 8 mit veränderter Funktionslage im Bereich einer Abdeckung der Rotoren,
- Fig. 10: eine Draufsicht auf die Baugruppe gemäß Fig. 9,
- Fig. 11: eine Seitenansicht ähnlich Fig. 8 der mit einem Rodeaggregat ver- sehenen Häcksel-Baugruppe,
- Fig. 12: eine Seitenansicht ähnlich Fig. 8, wobei die beiden Rotoren der Häcksel-Baugruppe verändert gegenläufige Drehrichtungen aufwei- sen,
- Fig. 13: eine Seitenansicht ähnlich Fig. 12 mit Ableitung des Häckselgutes zur Ausfördereinheit, und
- Fig. 14: eine Draufsicht auf die Baugruppe gemäß Fig. 13 in einer Schnitt- darstellung.

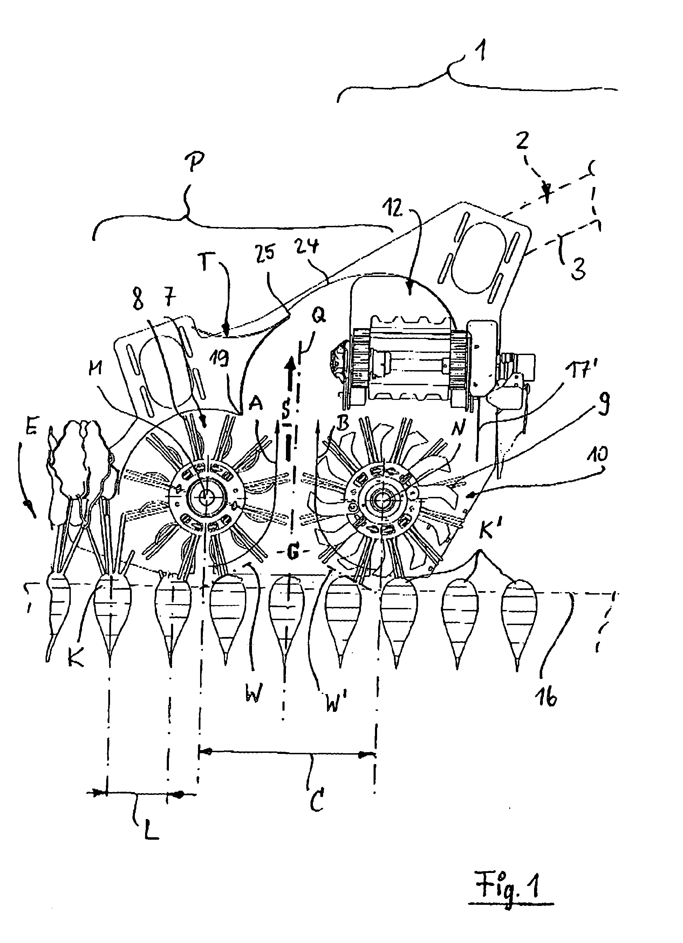

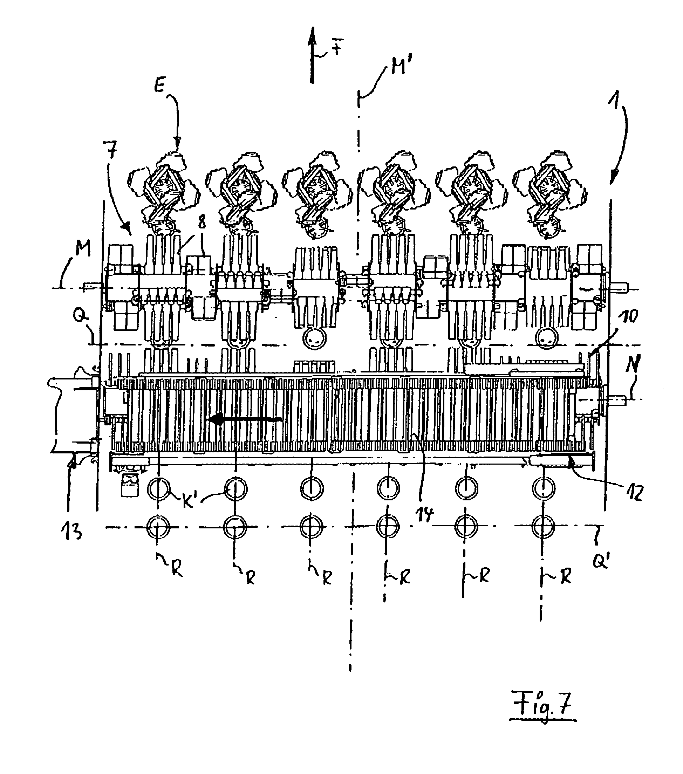

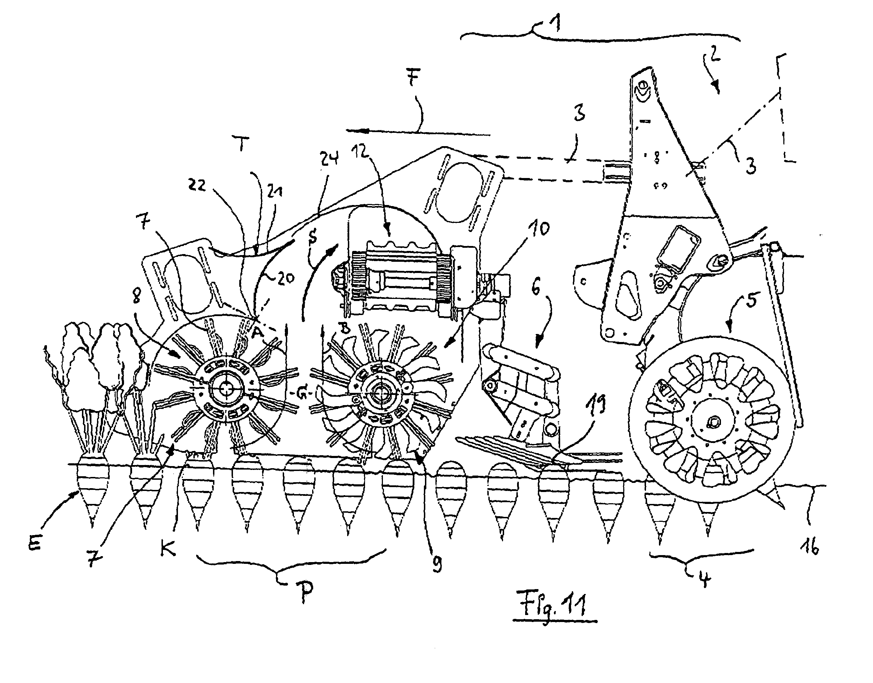

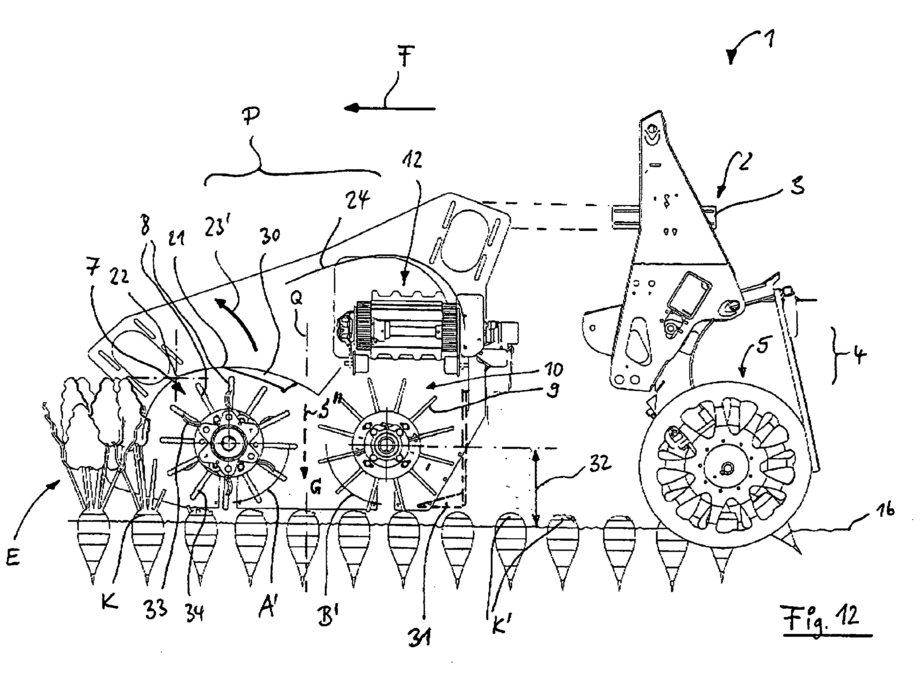

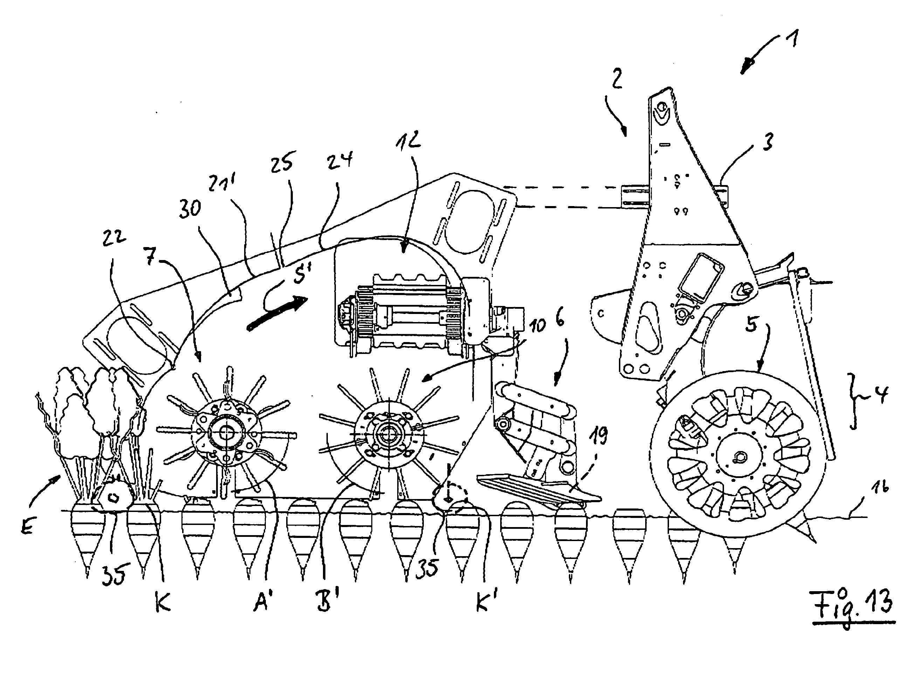

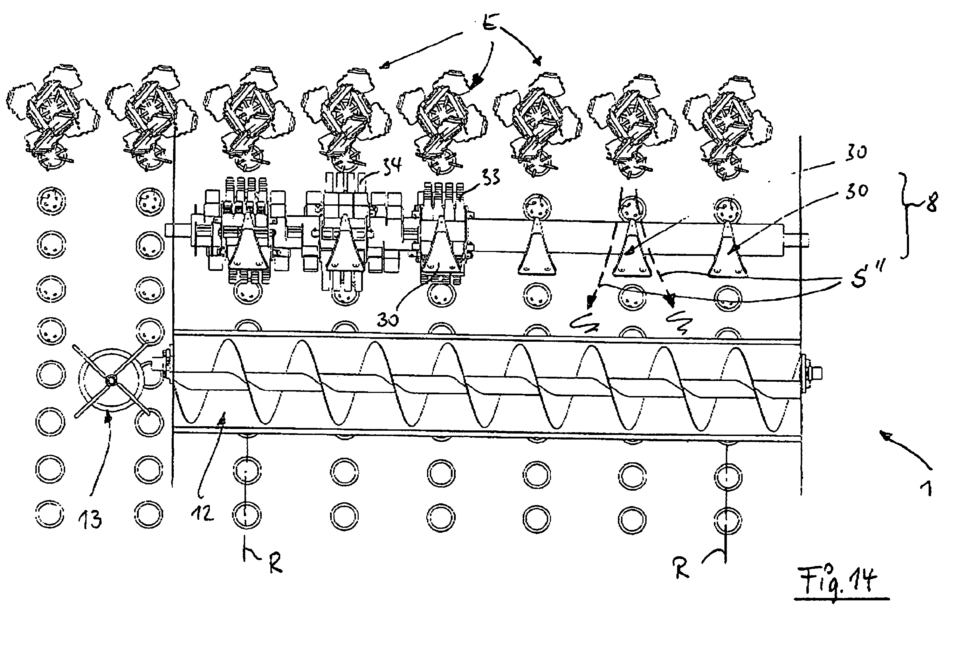

In Fig. 1 ist in einer Ausschnittsdarstellung eine insgesamt mit 1 bezeichnete, insbesondere in Form eines Vollernters ausgeführte Rübenemtemaschine (Fig. 11, Fig. 12) dargestellt. An deren schematisch gezeigtem Fahrzeugrahmen 2 ist ein durch nicht näher dargestellte Tragelemente 3 gehaltenes Rodeaggregat 4 vorgesehen. Eine derartige Rübenemtemaschine 1 wird von der Firma Grimme unter der Bezeichnung "Maxtron 620" (Grimme Landmaschinenfabrik GmbH & Co. KG, Damme, Prospekt-Nr. 09/04/1500) vertrieben. Derartige Maschinen 1 sind insbesondere in Form von sechs Reihen R (Fig. 7, Fig. 14) aufnehmenden Zuckerrüben-Vollerntemaschinen ausgebildet. In einer Fahrtrichtung F vorgeordnet jeweiligen Rodescharen 5 (Fig. 11, Fig. 12) weist die Maschine 1 in mehrreihiger Anordnung sowohl Schnittwerkzeuge in Form von Nachköpfern 6 (Fig. 13) als auch eine vor diesen gehaltene Häcksel-Putz-Baugruppen auf. Dabei ist auch allgemein bekannt, in diesen Baugruppen einen insgesamt mit 8 bezeichnete Werkzeuge aufweisenden Blatthäcksler 7 und eine mit Nachputzer-Werkzeugen 9 o. dgl. versehene zweite Rotorbaugruppe 10 vorzusehen, so dass vor dem eigentlichen Rodevorgang bei 5 jeweilige Rübenblätter o. dgl. Teile vom Rübenkopf K entfernbar sind.

Das erfindungsgemäße Konzept der Rübenerntemaschine 1 sieht vor, dass nunmehr mittels eines am Rübenkopf K - vorzugsweise entgegen der Fahrtrichtung F - wirkende Werkzeuge 8 aufweisenden Blatthäckslers 7 (Drehrichtung A) und eines am Rübenkopf K - vorzugsweise in Fahrtrichtung F - wirkende Werkzeuge 9 aufweisenden Nachputzers 10 (Drehrichtung B) das Emtegut E entnahmefertig bearbeitet wird. Diese entnahmefertige Bearbeitung des Erntegutes wird damit durch eine Konstruktion erreicht, bei der an sich bekannte Bauteile in überraschender Kombination zu einer einen neuen Mittel-Wirkungs-Zusammenhang definierenden Anordnung P vereinigt sind.

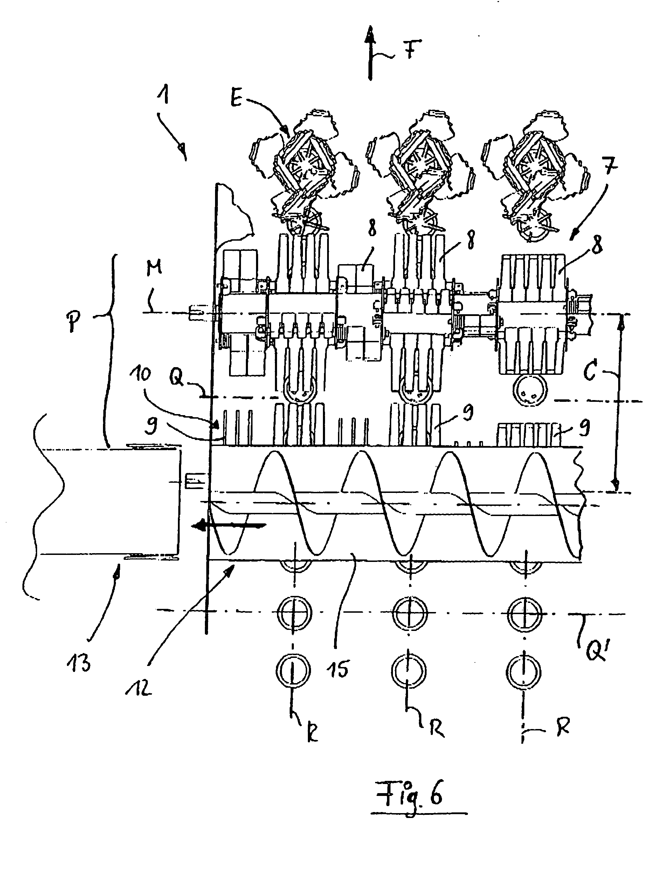

Die Prinzipdarstellungen gemäß Fig. 1 und Fig. 12 verdeutlichen, dass mit den Werkzeugen 8, 9 des Blatthäckslers 7 und des Nachputzers 10 eine nur zweirotorige Funktionseinheit P in kompakter Ausführung genutzt wird. In Zusammenschau mit den Ansichten gemäß Fig. 6, 7 und 14 wird deutlich, dass sich diese Funktionseinheit P in Querrichtung Q, Q' der insbesondere mehrreihig (Reihen R) arbeitenden Maschine 1 vor deren Rodeorganen 5 (Fig. 11, Fig. 12) erstreckt.

Als wesentlicher Unterschied zu an sich bekannten Wirkmechanismen im Bereich der bekannten Blatthäcksler sieht das erfindungsgemäße Konzept vor, dass durch am Rübenkopf K gegensinnig aufeinander zu laufende Drehrichtungen (Pfeil A und B bzw. A', B') der nur zwei Werkzeuge 8, 9 aus zwei bei dieser Bearbeitung am Rübenkopf K entstehenden Teilströmen ein jeweiliger zentraler Förderstrom S, S' aus Pflanzenteilen erzeugt wird. Dabei sind die jeweils durch variable Wirkparameter wie Bodenabstand 32, Drehgeschwindigkeit, Achsabstand C, Werkzeuganzahl u. dgl. beeinflussbaren Werkzeuge 8, 9 so ausgerichtet und gesteuert, dass der Förderstrom S, S' zumindest bereichsweise eine vertikale Förderrichtung in der Querebene Q aufweist (Fig. 1, Fig. 12).

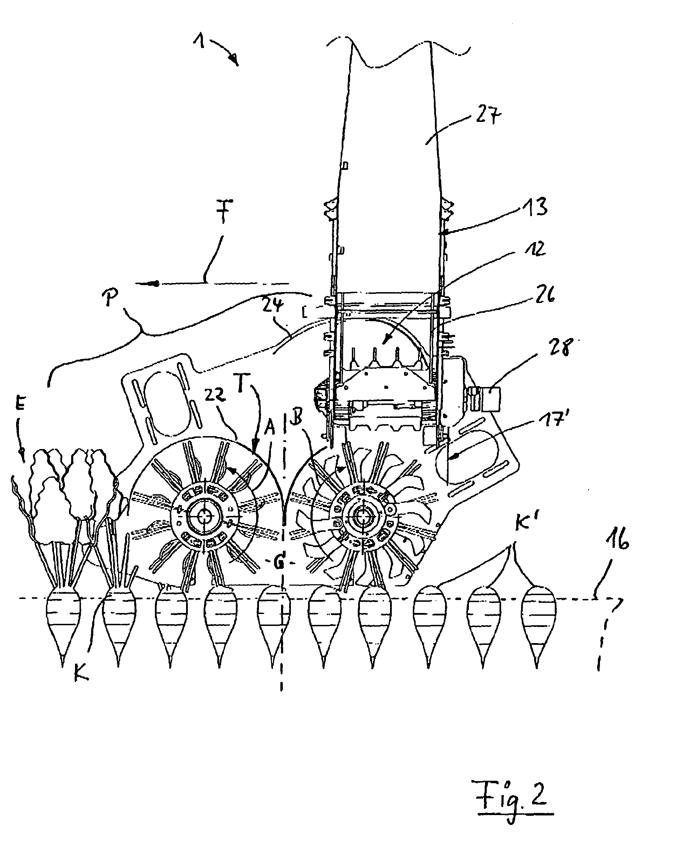

Aus den jeweiligen Bearbeitungsphasen der sich an den Rübenköpfen K gegensinnig drehenden Werkzeuge 8, 9 wird deutlich, dass dabei jeweilige Teil-Wirkflächen W, W' definierbar sind, mit denen die vollständige Säuberung des Rübenkopfes (K', Fig. 1, Fig. 2) deutlich wird. Dabei ist dieses System so optimiert, dass diese entnahmefertige Säuberung des Erntegutes E durch eine entsprechende Einstellung der Werkzeuge 8, 9 der Funktionseinheit P erreicht wird. Mit nicht näher dargestellten Stell- und Bedienbauteilen an der Maschine 1 ist es möglich, dass eine Einstellung von an die jeweilige Erntesituation anpassbaren Bearbeitungslagen jeweils einzeln an den Werkzeugen 8, 9 bzw. gemeinsam an diesen und/oder der gesamten Baugruppe P durchführbar ist. Dabei sind insbesondere Einstellungen denkbar, bei denen die Werkzeuge 8, 9 bzw. deren jeweilige Drehachsen M, N in Relation zu den jeweiligen Wirkflächen W, W' in horizontaler und/oder vertikaler Richtung (Pfeil 32, Fig. 12) verändert werden. Ebenso ist denkbar, für diese Einstellungen eine durch Sensoren o. dgl. beeinflussbare automatische Prozesssteuerung in die Maschine 1 zu installieren (nicht dargestellt) oder zur Steuerung entsprechende Führungsräder 35 an das System anzubauen, um eine stufenlose Höheneinstellung zu erreichen.

In der dargestellten Ausführung der beiden Rotor-Werkzeuge 8, 9 weisen diese einen entsprechenden Achsabstand C auf, derart, dass für den Förderstrom S ein zentraler Freiraum G gebildet ist. Denkbar ist auch, dass die beiden Werkzeuge 8, 9 mit einem sich überschneidende Kreisbahnen definierenden Abstand (nicht dargestellt) angeordnet sind. Ausgehend von den durch ein Maß L (Fig. 1) vorgegebenen Abständen des Pflanzgutes E ist denkbar, dass die Zwei-Rotoren-Baugruppe eine Werkzeugeinstellung aufweist, bei der die zwei Werkzeuge 8, 9 zumindest phasenweise gleichzeitig an einem der Rübenköpfe K wirksam sind. In der dargestellten Ausführung mit dem Aufnahmeraum G für den Förderstrom S wird gleichzeitig deutlich, dass durch den weitgehend frei wählbaren Achsabstand C zwei unmittelbar aufeinanderfolgende Phasen der Bearbeitung des "balligen" Rübenkopfes K definiert sind.

In optimaler Anpassung an die jeweiligen Bearbeitungsbedingungen im Bereich des Erntegutes E bzw. der Rübenblätter und der damit zu verarbeitenden Pflanzen-Mengen ist auch das Volumen des erzeugten Förderstroms S entsprechenden Schwankungen unterworfen, so dass dessen Weiterleitung eine variable Steuerung erfordert. Dazu ist vorgesehen, dass der im Bereich der Funktionseinheit P von den rotierenden Werkzeugen 8, 9 erzeugte Förderstrom S teilbar ist (Fig. 12, Fig. 14). Die Funktionseinheit P ist dabei so ausgelegt, dass mittels des in Fahrtrichtung F jeweils vorderen Werkzeugs 8 bereits 80% bis 100%, vorzugsweise 90%, des Volumens der Rübenblätter vom Rübenkopf K entfernbar sind. Dazu sind im Bereich des Blatthäckslers 7 jeweilige Löffelschlegel 33 aus Stahl und Gummischlegel 34 vorgesehen (Fig. 12), so dass eine entsprechende Verschleißfestigkeit mit hoher Standzeit erreicht wird. Im Bereich der Putzwerkzeuge 9 sind dann nur noch Gummischlegel erforderlich.

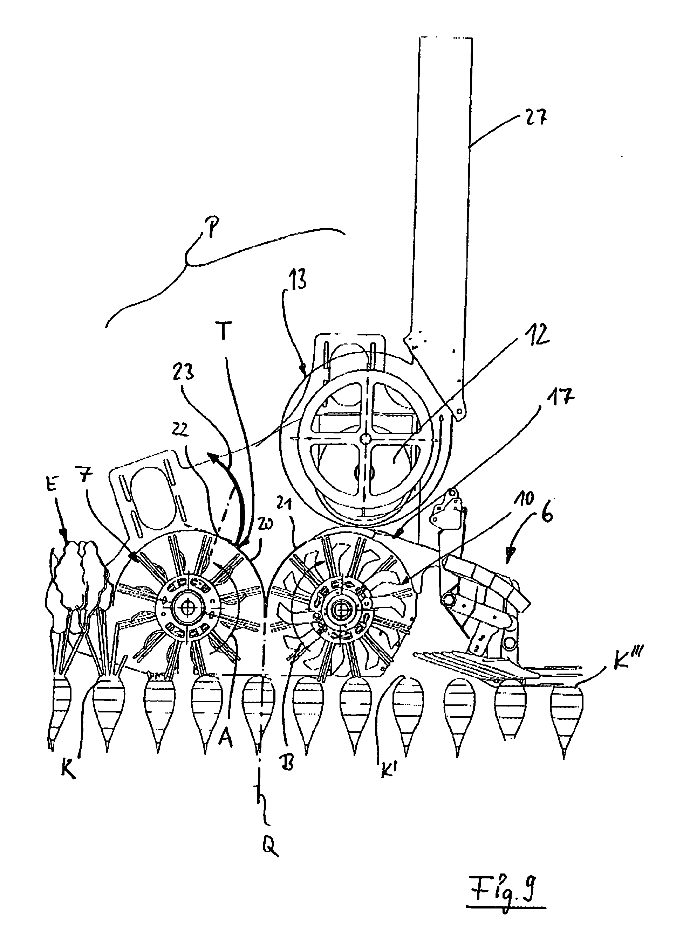

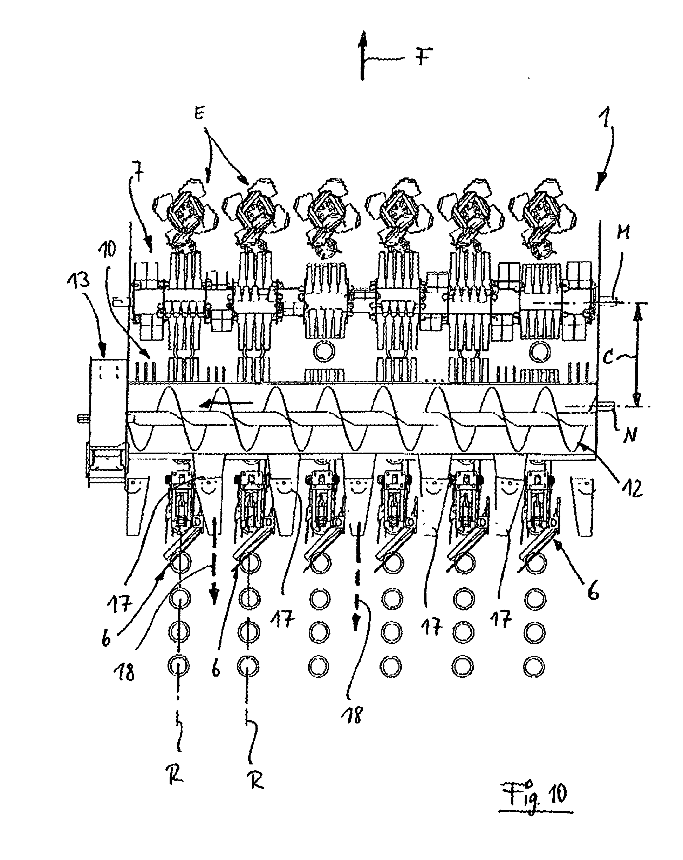

In Fig. 2 ist dafür ein erstes Beispiel gezeigt, wobei in den Erzeugungsbereich G des Förderstroms S eine aus schwenkbar verbundenen Teilen bestehende Abdeckung T eingreift. Mit dieser können die beiden Teil-Förderströme (entsprechend Drehrichtung A und B) im Nahbereich des jeweiligen Rotors verbleiben bzw. zum Ackerboden 16 hin abgeleitet werden. In der Ausführung gemäß Fig. 9 ist ein ähnliches System mit der Abdeckung T dargestellt, wobei oberhalb des zweiten Rotors 10 ein dessen Teil-Förderstrom aufnehmendes Leitelement 17 (ähnlich: 17', Fig. 1) vorgesehen ist, mit dem der Teilförderstrom bzw. die entsprechenden Pflanzenteile zwischen den Reihen R ablegbar sind (Fig. 10, Pfeil 18). Dabei ist denkbar, dass auch der gesamte Förderstrom S hinter dem Nachputzer 10 bzw. bis hinter ein Schneidwerkzeug 19 des Nachköpfers 6 in den Zwischenraum zwischen den Rübenreihen R abgelegt wird. Damit ist gewährleistet, dass für den denkbaren Fall eines als "säuberndes" Zusatzteil installierten Nachköpfers 6 dessen Schneidmesser 19 weitgehend unbeeinflusst von Pflanzenresten am Rübenkopf K wirken kann (Fig. 10).

Die Optimierung der an der Rübenerntemaschine 1 vorgesehenen Funktionseinheit P mit Blick auf eine effektive Handhabung des Förderstroms S, S' hat dazu geführt, dass für eine weitgehend geschlossene Bauweise des Systems die im wesentlichen oberhalb der beiden rotierenden Werkzeuggruppen 7, 10 verlaufende Abdeckung T mit mehreren Abdeckbereichen 20, 21, 21' versehen ist. Diese Abdeckbereiche 20, 21, 21' sind im Bereich einer Gelenkverbindung 22 so verbunden, dass zumindest die beiden aus Fig. 1, Fig. 2, Fig. 9, Fig. 12, Fig. 13 ersichtlichen Funktionslagen durch eine einfache Schwenkbewegung (Pfeil 23, Fig. 9; Pfeil 23', Fig. 12) erreichbar sind. Ebenso ist denkbar, dass die verschwenkbaren Abdeckbereiche 20, 21, 21' ausgehend von der oberen Leitstellung (Fig. 1) für den Förderstrom S, S' (Fig. 1, Fig. 13) entsprechende Zwischenstellungen (nicht dargestellt) einnehmen können.

Dieses Konzept der Abdeckung T ist so aufgebaut, dass die Abdeckbereiche 20, 21, 21' nach Art einer Schwenkhaube zusammenwirken, die zumindest bereichsweise in die Bewegungsbahn des Förderstroms S eingreifen kann. Dabei kann der Abdeckbereich 21 eine nach Art einer Leithaube definierbare Funktionslage einnehmen, so dass in einer Anlagestellung 25 an einer Deckhaube 24 ein geschlossener Förderraum für den aufsteigenden Förderstrom S, S' gebildet ist (Fig. 1, Fig. 4, Fig. 5, Fig. 8, Fig. 13).

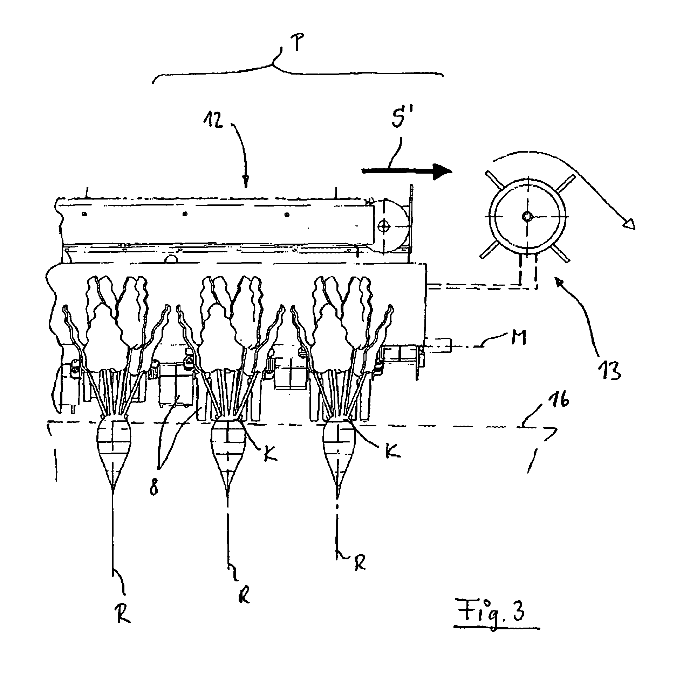

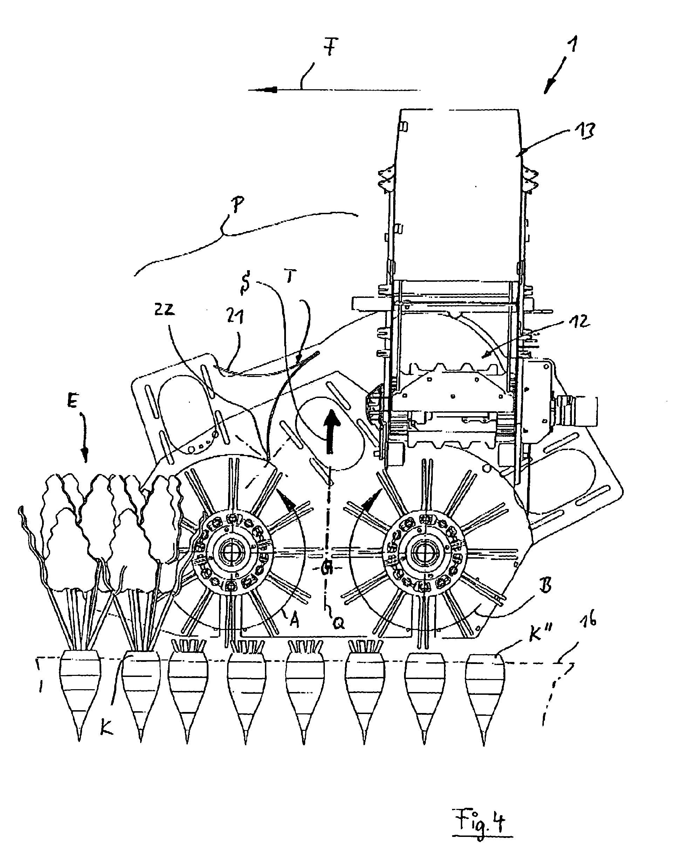

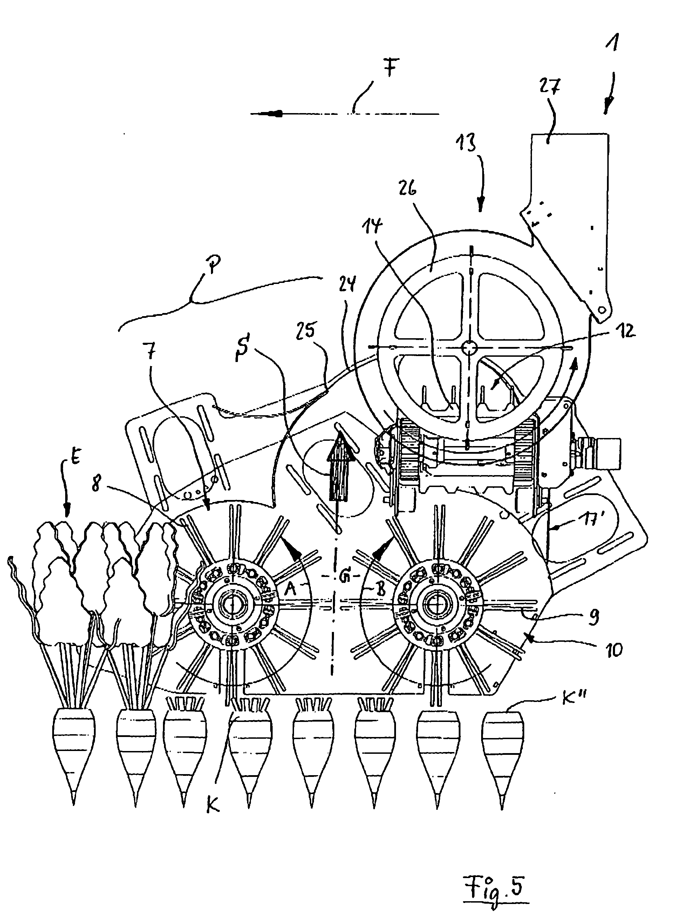

Eine besonders vorteilhafte Anwendung und Nutzung der Rübenerntemaschine 1 mit der vorgeordneten Funktionseinheit P wird dadurch erreicht, dass mit dem Konzept des zentralen Förderstroms S, S' auch eine effiziente Ausleitung des zerkleinerten Pftanzenmaterials zu dessen Weiternutzung möglich wird. Dazu ist vorgesehen, dass der Förderstrom S im Nahbereich der beiden Rotoren 7, 10 in einen allgemein mit 12 bezeichneten Querförderer eingeleitet wird und damit Pflanzenteile aus dieser erweiterten Baueinheit gezielt ausgefördert werden können. In den jeweiligen Ansichten gemäß Fig. 2, 3, 6, 7, 10 sowie 14 wird deutlich, dass am Querförderer 12 zumindest eine den Förderstrom S, S' aufnehmende Übergabeeinheit 13 vorgesehen ist. Als Querförderer 12 sind dabei jeweilige oberhalb des Nachputzers 10 angeordnete Bandförderer 14 (Fig. 7) oder Schneckenförderer 15 (Fig. 6, Fig. 14) denkbar. Aus der Zusammenschau von Fig. 4 und Fig. 5 wird deutlich, dass die aus dem Querförderer 12 herausgeförderten Pflanzenteile in der Übergabeeinheit 13 durch ein zusätzliches Austragwerkzeug - beispielsweise mittels eines einen Antrieb 28 aufweisenden Förderrades 26 - übernehmbar und mittels eines Leitrohres 27 o. dgl. Übergabeteil auf ein mitfahrendes Transportfahrzeug (nicht dargestellt) übergebbar sind. Ebenso ist denkbar, dass sämtliche Pflanzenteile auf dem bereits abgeernteten Bereich des Ackerbodens 16 verteilt werden und damit eine "Naturdüngung" erfolgt.

In den Darstellungen gemäß Fig. 12 bis 14 ist eine Ausführung des Zwei-Rotoren-Systems dargestellt, wobei mittels eines am Rübenkopf K in Fahrtrichtung F wirkende Werkzeuge 8 aufweisenden Blatthäckslers 7 und eines am Rübenkopf K entgegen der Fahrtrichtung F wirkende Werkzeuge 9 aufweisenden Nachputzers 10 das Erntegut E entnahmefertig bearbeitet wird. Aus der Zusammenschau von Fig. 12 und 14 wird deutlich, dass in dieser Arbeitsstellung das vom Blatthäcksler 7 erfasste Volumen der Rübenblätter (ca. 95%) im Bereich des als Abdeckbereich 21 wirkenden Leitbleches von einer Teilerbaugruppe 30 erfasst und damit in Richtung der beiden Teil-Förderströme S" zwischen die Reihen R eingeleitet wird (Fig. 14).

Es versteht sich, dass bei dieser Verfahrensvariante nur "seitliche" Teilmengen der vom Nachputzer 10 in die Teilströme S" eingeförderten Blattreste erfasst werden und die verbleibenden Blattreste (insbesondere weniger als 5% des Gesamtvolumens) entgegen der Fahrtrichtung nach hinten verlagert werden. Um auch diese für den weiteren Köpf- und/oder Rodevorgang (Fig. 12) wenig relevanten Teilmengen optimal zu verteilen, ist denkbar, auch im Bereich des Nachputzers 10 eine zusätzliche Teilerbaugruppe 31 (Strichdarstellung, Fig. 12) vorzusehen.

Aus der Darstellung gemäß Fig. 13, die das Ausfördern des Förderstromes S' mittels des Querförderers 12 zeigt, ist die weitere optionale Anordnung des (an sich überflüssigen) Nachköpfers 6 (ähnlich Fig. 11) gezeigt. Dessen Einsatz ist bei dem erfindungsgemäßen Konzept effizient möglich, da die vom Nachputzer 10 in Richtung der bereits geputzten Köpfe K' verlagerten Verschmutzungen minimal sind, wobei der "aggressive" Blatthäcksler 7 (Antriebsdrehzahl: stufenlos von 900 bis 1500 U/min) bereits mehr als 90% der im Nahbereich des Erntegutes E befindlichen und den Köpfprozess beeinflussenden Fremdstoffe o. dgl. Pflanzenreste entfernt hat.

Vorteilhaft ist jedoch ein gezieltes Einleiten des Förderstroms S, S' in einen nicht näher dargestellten Sammelbehälter vorgesehen, so dass das Sammelgut mit Pflanzenteilen als biologischer Rohstoff zur Gasgewinnung o. dgl. Anwendungen nutzbar ist. Damit wird auch deutlich, dass das aus Fig. 1 bzw. Fig. 12 ersichtliche Grundkonzept der Funktionseinheit P auch als ein autarkes System, beispielsweise an einem Schlepper o. dgl. Fahrzeug, nutzbar ist und mit diesem nur Pflanzenteile in Form des Rübenblattes u. dgl. Grünwuchs als Rohstoff geerntet bzw. auf den Boden aufgelegt werden.

## Patentansprüche

1. Rübenerntemaschine, mit zumindest einem rotierende Häckselelemente (8) aufweisenden Blatthäcksler (7) und einer in Fahrtrichtung (F) hinter diesem als ein Nachputzer o. dgl. wirksamen Rotorbaugruppe (10), womit vom Erntegut (E) vor einem Rodevorgang (5) jeweilige Rübenblätter u. dgl. Teile des Rübenkopfes (K) entfernbar sind, **dadurch gekennzeichnet, dass** mit nur zwei in ihrer Wirkphase am Rübenkopf gegensinnig drehenden sowie nur einen gemeinsamen Förderstrom (S) aufbauenden Werkzeugen (8, 9) das Erntegut (E) zumindest im Bereich des Rübenkopfes (K) entnahmefertig bearbeitbar ist.

2. Rübenerntemaschine nach Anspruch 1, **dadurch gekennzeichnet, dass** mittels eines am Rübenkopf (K) entgegen der Fahrtrichtung (F) wirkende Werkzeuge (8) aufweisenden Blatthäckslers (7) und eines am Rübenkopf (K) in Fahrtrichtung wirkende Werkzeuge (9) aufweisenden Nachputzers (10) das Erntegut (E) entnahmefertig bearbeitbar ist.

3. Rübenemtemaschine nach Anspruch 1, **dadurch gekennzeichnet, dass** mittels eines am Rübenkopf (K) in Fahrtrichtung (F) wirkende Werkzeuge (8) aufweisenden Blatthäckslers (7) und eines am Rübenkopf (K) entgegen der Fahrtrichtung (F) wirkende Werkzeuge (9) aufweisenden Nachputzers (10) das Erntegut (E) entnahmefertig bearbeitbar ist.

4. Rübenerntemaschine nach einem der Ansprüche 1 bis 3, **dadurch gekennzeichnet, dass** mit den Werkzeugen (8,9) des Blatthäckslers (7) und des Nachputzers (10) eine nur zweirotorige Funktionseinheit (P) gebildet ist, die sich in Querrichtung (Q, Q') der insbesondere mehrreihig arbeitenden Maschine (1) vor deren Rodeaggregat (4) erstreckt.

5. Rübenerntemaschine nach Anspruch 1 oder 2, **dadurch gekennzeichnet, dass** mit der Funktionseinheit (P) im Bereich zwischen Blatthäcksler (7) und Nachputzer (10) zumindest phasenweise ein durch deren am Rübenkopf (K) gegensinnige Drehrichtungen (A, B; A', B') aus zwei Teilströmen gebildeter Förderstrom (S) aus Pflanzenteilen erzeugbar ist.

6. Rübenerntemaschine nach einem der Ansprüche 1 bis 5, **dadurch gekennzeichnet, dass** die von den beiden Werkzeugen (8, 9) jeweils erfassten Pflanzenteile in dem zumindest bereichsweise eine vertikale Förderrichtung aufweisenden Förderstrom (S) zusammenführbar sind.

7. Rübenemtemaschine nach einem der Ansprüche 1 bis 6, **dadurch gekennzeichnet, dass** die gegensinnig drehenden Werkzeuge (8, 9) jeweilige Teil-Wirkflächen (W, W') bilden, mit denen die vollständige Säuberung des Rübenkopfes (K') definierbar ist.

8. Rübenerntemaschine nach einem der Ansprüche 1 bis 7, **dadurch gekennzeichnet, dass** die Werkzeuge (8, 9) der Funktionseinheit (P) einzeln oder gemeinsam auf jeweilige Bearbeitungslagen (Tiefenführung 32) einstellbar sind.

9. Rübenerntemaschine nach Anspruch 8, **dadurch gekennzeichnet, dass** die Werkzeuge (8, 9) bzw. deren jeweilige Drehachsen (M, N) in Relation zu den jeweiligen Wirkflächen (W, W) in horizontaler und/oder vertikaler Richtung verstellbar sind.

10. Rübenerntemaschine nach Anspruch 8 oder 9, **dadurch gekennzeichnet, dass** die Werkzeuge (8, 9) einzeln oder gemeinsam in ihrer Drehrichtung umschaltbar sind.

11. Rübenerntemaschine nach einem der Ansprüche 1 bis 10, **dadurch gekennzeichnet, dass** der Blatthäcksler (7) und der Nachputzer (10) mit einem sich teilweise überschneidende Kreisbahnen der Werkzeuge (8, 9) definierenden Achsabstand angeordnet sind.

12. Rübenemtemaschine nach Anspruch 11, **dadurch gekennzeichnet, dass** die Werkzeuge (8, 9) zumindest phasenweise gleichzeitig an einem der Rübenköpfe (K) wirksam sind.

13. Rübenerntemaschine nach einem der Ansprüche 1 bis 10, **dadurch gekennzeichnet, dass** der Blatthäcksler (7) und der Nachputzer (10) einen zwischen diesen einen Aufnahmeraum (G, G') für den Förderstrom (S, S") bildenden Achsabstand (C) aufweisen.

14. Rübenerntemaschine nach Anspruch 13, **dadurch gekennzeichnet, dass** mit dem Aufnahmeraum (G) zwischen den beiden rotierenden Werkzeugen (8, 9) zwei Phasen der Bearbeitung des Rübenkopfes (K) definierbar sind.

15. Rübenerntemaschine nach einem der Ansprüche 1 bis 14, **dadurch gekennzeichnet, dass** der im Bereich der Funktionseinheit (P) von den rotierenden Werkzeugen (8, 9) erzeugte Förderstrom (S, S') teilbar ist.

16. Rübenerntemaschine nach einem der Ansprüche 1 bis 15, **dadurch gekennzeichnet, dass** der Förderstrom (S, S') in bzw. aus der Funktionseinheit (P) gezielt ableitbar ist.

17. Rübenerntemaschine nach Anspruch 16, **dadurch gekennzeichnet, dass** der Förderstrom (S) seitlich neben zumindest einer Rübenreihe (R) aus der Funktionseinheit (P) ausförderbar (Pfeil S") ist.

18. Rübenerntemaschine nach Anspruch 16, **dadurch gekennzeichnet, dass** nur der vom Nachputzer (10) erzeugte Teil-Förderstrom nach hinten und seitlich neben die Rübenreihe (R) ausleitbar ist.

19. Rübenerntemaschine nach einem der Ansprüche 16 bis 18, **dadurch gekennzeichnet, dass** der Förderstrom (S) bzw. der Teilförderstrom bis hinter eine dem Nachputzer (10) folgende Rübenkopfvorrichtung (6) verlagerbar ist.

20. Rübenerntemaschine nach einem der Ansprüche 1 bis 16, **dadurch gekennzeichnet, dass** der Förderstrom (S) im Bereich der Funktionseinheit (P) in einen Querförderer (12) einleitbar und aus dieser Baueinheit ausförderbar ist.

21. Rübenerntemaschine nach Anspruch 20, **dadurch gekennzeichnet, dass** als Querförderer (12) jeweilige oberhalb des Nachputzers (10) angeordnete Band- oder Schneckenförderer (14, 15) vorgesehen sind.

22. Rübenerntemaschine nach Anspruch 21, **dadurch gekennzeichnet, dass** am Querförderer (12) zumindest eine den Förderstrom (S) aufnehmende Übergabeeinheit (13) vorgesehen ist.

23. Rübenerntemaschine nach einem der Ansprüche 1 bis 22, **dadurch gekennzeichnet, dass** die Funktionseinheit (P) eine im wesentlichen oberhalb der beiden rotierenden Baugruppen (7, 10) verlaufende und mehrere Abdeckbereiche (20, 21) definierende Abdeckung (T) aufweist.

24. Rübenerntemaschine nach Anspruch 23, **dadurch gekennzeichnet, dass** die Abdeckung (T) mit einer zumindest bereichsweise in die Bewegungsbahn des Förderstroms (S, S') eingreifenden Schwenkhaube (21, 21') versehen, an dieser eine in Förderrichtung anschließende Leithaube vorgesehen und diese an einer den Bereich des Querförderers (12) übergreifenden Deckhaube (24, 24') anlegbar ist.

25. Rübenerntemaschine nach Anspruch 23 oder 24, **dadurch gekennzeichnet, dass** die Abdeckung (T) zumindest im Bereich der Schwenkhaube (20, 21, 21') in jeweilige Funktionslagen schwenkbar ist.

26. Rübenerntemaschine nach einem der Ansprüche 23 bis 25, **dadurch gekennzeichnet, dass** der Nachputzer (10) im Nahbereich seiner von den rotierenden Werkzeugen (9) definierten Bewegungsbahn zumindest ein Leitblech (17, 17') aufweist.

27. Rübenerntemaschine nach einem der Ansprüche 1 bis 26, **dadurch gekennzeichnet, dass** im Wirkbereich (Pfeil A, A', B, B') der beiden Werkzeuge (8, 9) bzw. des jeweils von diesen erzeugten Förderstromes (S, S") eine diesen beeinflussende Teilerbaugruppe (30, 31) vorgesehen ist.

28. Rübenerntemaschine nach einem der Ansprüche 1 bis 27, **dadurch gekennzeichnet, dass** die Funktionseinheit (P) im Verbindungsbereich zu einem Tragrahmen (2, 3) der Maschine (1) eine für Kipp- und/oder Schwenkbewegungen des Systems verwendbare Stellbaugruppe aufweist.

29. Rübenerntemaschine nach Anspruch 28, **dadurch gekennzeichnet, dass** die Funktionseinheit (P) und/oder an dieser vorgesehen Baugruppen mittels der Steilbaugruppe in Längs- und/oder Querrichtung (Q) der Maschine (1) verlagerbar sind.

30. Rübenerntemaschine nach einem der Ansprüche 1 bis 29, **dadurch gekennzeichnet, dass** mittels jeweiliger vorder- bzw. rückseitiger Führungsräder (35) die Funktionseinheit (P) bzw. deren rotierende Werkzeuge (8, 9) in ihrer Arbeitshöhe einstellbar sind.

31. Rübenerntemaschine nach einem der Ansprüche 1 bis 30, **dadurch gekennzeichnet, dass** mittels des in Fahrtrichtung (F) jeweils vorderen Werkzeuges (8) 80% bis 100%, vorzugsweise 90%, des Volumens der Rübenblätter vom Rübenkopf (K) entfernbar sind.

32. Erntemaschine mit nur zwei in ihrer Wirkphase am Rübenkopf gegensinnig drehenden und nur einen gemeinsamen Förderstrom aufbauenden Rotoren gemäß einem oder mehreren der Ansprüche 1 bis 31, **dadurch gekennzeichnet, dass** die zwei Rotoren eine Funktionseinheit (P) bilden, die unabhängig vom Rodevorgang als ein autarkes System zum Häckseln von Rübenblatt o. dgl. anwendbar ist.

## Claims

1. Beet harvester, having at least one defoliator (7) having rotating defoliating elements (8), and a rotor sub-assembly (10) which acts downstream of the latter in the direction of travel (F) as a post-topper or the like, whereby leaves and the like parts of each beet head (K) can be removed from the crop for harvesting (E) prior to a lifting operation (5), **characterised in that** the crop for harvesting (E) can be processed to be ready for lifting by only two tools (8, 9) which rotate in opposite directions in the phase in which they act on the beet head (K) and which generate only one common fed flow (S).

2. Beet harvester according to claim 1, **characterised in that** the crop for harvesting (E) can be processed to be ready for lifting by means of a defoliator (7) having tools (8) which act on the beet head (K) in the opposite direction from the direction of travel (F) and a post-topper (10) having tools (9) which act on the beet head (K) in the direction of travel.

3. Beet harvester according to claim 1, **characterised in that** the crop for harvesting (E) can be processed to be ready for lifting by means of a defoliator (7) having tools (8) which act on the beet head (K) in the direction of travel (F) and a post-topper (10) having tools (9) which act on the beet head (K) in the opposite direction from the direction of travel (F).

4. Beet harvester according to one of claims 1 to 3, **characterised in that** there is formed by the tools (8, 9) of the defoliator (7) and post-topper (10) a functional unit (P) having only two rotors which extends in the transverse direction (Q, Q') of the harvester (1), upstream of the lifting assembly (4) of the harvester (1), which harvester (1) operates in particular over a plurality of rows.

5. Beet harvester according to claim 1 or 2, **characterised in that**, by the functional unit (P) and in the region between the defoliator (7) and post-topper (10), a fed flow (S) of pieces of plant can be formed, at least in a phase or phases, from two part-flows as a result of the opposite directions of rotation (A, B; A', B') of the defoliator (7) and post-topper (10).

6. Beet harvester according to one of claims 1 to 5, **characterised in that** the pieces of plant which are respectively taken hold of by the two tools (8, 9) can be brought together in the fed flow (S), in which feed is in a vertical direction at least in a region or regions.

7. Beet harvester according to one of claims 1 to 6, **characterised in that** the tools (8, 9) rotating in opposite directions create respective areas of action (W, W') by which the full cleaning of the beet head (K') can be defined.

8. Beet harvester according to one of claims 1 to 7, **characterised in that** the tools (8, 9) of the functional unit (P) can be set to respective processing positions (under depthwise guidance 32) individually or together.

9. Beet harvester according to claim 8, **characterised in that** the tools (8, 9), i.e. their respective axes of rotation (M, N), can be adjusted in the horizontal and/or vertical directions in relation to the respective areas of action (W, W').

10. Beet harvester according to claim 8 or 9, **characterised in that** the directions of rotation of the tools (8, 9) can be changed over either individually or together.

11. Beet harvester according to one of claims 1 to 10, **characterised in that** the defoliator (7) and post-topper (10) are arranged at a spacing between their axes which defines for the tools (8, 9) circular paths which partly intersect.

12. Beet harvester according to claim 11, **characterised in that**, at least in a phase or phases, the tools (8, 9) act simultaneously on one of the beet heads (K).

13. Beet harvester according to one of claims 1 to 10, **characterised in that** the defoliator (7) and post-topper (10) are at a spacing (C) between their axes which creates between them a receiving space (G, G') for the fed flow (S, S").

14. Beet harvester according to claim 13, **characterised in that** two phases of the processing of the beet head (K) can be defined by the receiving space (G) between the two rotating tools (8, 9).

15. Beet harvester according to one of claims 1 to 14, **characterised in that** the fed flow (S, S') produced by the rotating tools (8, 9) can be divided in the region of the functional unit (P).

16. Beet harvester according to one of claims 1 to 15, **characterised in that** the fed flow (S, S') can be diverted in a targeted way in or out of the functional unit (P).

17. Beet harvester according to claim 16, **characterised in that** the fed flow (S) can be fed out (arrow S") of the functional unit (P) sideways next to at least one row (R) of beets.

18. Beet harvester according to claim 16, **characterised in that** only the part fed flow produced by the post-topper (10) can be conveyed out rearwards and sideways next to the row (R) of beets.

19. Beet harvester according to one of claims 16 to 18, **characterised in that** the fed flow (S) or part fed flow can be displaced to a point behind a beet-scalping arrangement (6) which follows the post-topper (10).

20. Beet harvester according to one of claims 1 to 16, **characterised in that**, in the region of the functional unit (P), the fed flow (S) can be conveyed onto a transverse conveyor (12) and can be conveyed out of this unit of the structure.

21. Beet harvester according to claim 20, **characterised in that** what are provided as transverse conveyors (12) are, as the case may be, belt or screw conveyors (14, 15) which are arranged above the post-topper (10).

22. Beet harvester according to claim 21, **characterised in that** at least one transfer unit (13) which receives the fed flow (S) is provided at the transverse conveyor (12).

23. Beet harvester according to one of claims 1 to 22, **characterised in that** the functional unit (P) has a cover (T) which extends substantially above the two rotating sub-assemblies (7, 10) and which defines a plurality of covering regions (20, 21).

24. Beet harvester according to claim 23, **characterised in that** the cover (T) is provided with a pivoting cowling (21, 21') which enters the path of movement of the fed flow (S, S') at least in a region or regions, and there is provided on the said pivoting cowling (21, 21') a directing cowling which follows on in the direction of feed and which can be positioned against a top cowling (24, 24') which fits over the region occupied by the transverse conveyor (12).

25. Beet harvester according to claim 23 or 24, **characterised in that** the cover (T) can be pivoted to respective operating positions at least in the region of the pivoting cowling (20, 21, 21').

26. Beet harvester according to one of claims 23 to 25, **characterised in that** the post-topper (10) has at least one directing plate (17, 17') in the region close to its path of movement defined by the rotating tools (9).

27. Beet harvester according to one of claims 1 to 26, **characterised in that** there is provided in the region of action (arrows A, A', B, B') of the two tools (8, 9), or rather in the region of the fed flow (S, S") produced by each of them, a divider sub-assembly (30, 31) which acts on the said fed flow (S, S").

28. Beet harvester according to one of claims 1 to 27, **characterised in that** the functional unit (P) has, in the region of its connection to a chassis (2, 3) of the harvester (1), a positioning sub-assembly which can be used for tilting and/or pivoting movements of the system.

29. Beet harvester according to claim 28, **characterised in that** the functional unit (P) and/or sub-assemblies provided thereon can be displaced by means of the positioning sub-assembly in the longitudinal and/or transverse (Q) directions of the harvester (1).

30. Beet harvester according to one of claims 1 to 29, **characterised in that** the working height of the functional unit (P) and of its rotating tools (8, 9) can be set by means of guiding wheels (35) respectively at the front and the rear.

31. Beet harvester according to one of claims 1 to 30, **characterised in that** 80% to 100%, and preferably 90%, of the volume of leaves of the beet can be removed from the beet head (K) by means of the tool (8) which is at the front in the direction of travel (F) in the given case.

32. Harvester having only two rotors which rotate in opposite directions in the phase in which they act on the beet head and which generate only one common fed flow, according to one or more of claims 1 to 31, **characterised in that** the two rotors form one functional unit (P) which, independently of the lifting operation, can be used as a self-contained system for chopping beet leaves or the like.

## Revendications

1. Machine à récolter des betteraves, dotée d'au moins une hacheuse de feuilles (7) comprenant des éléments hacheurs rotatifs (8) et un ensemble rotor (10) opérant dans le sens de marche (F) derrière ladite hacheuse en tant que nettoyeuse ou similaire permettant de retirer du produit de la récolte (E) avant un processus d'arrachage (5) les feuilles de betterave respectives et les parties similaires du collet de betterave (K), **caractérisée en ce que** seulement deux outils (8, 9) tournant en sens inverse au cours de leurs phase opérationnelle et n'établissant qu'un seul débit de sortie (S) commun permettent de traiter le produit de la récolte (E) au moins dans la zone du collet de betterave (K) pour qu'il soit prêt à être ramassé.

2. Machine à récolter des betteraves selon la revendication 1, **caractérisée en ce qu'**une hacheuse de feuilles (7) comprenant des outils (8) agissant sur le collet de betterave (K) à l'encontre du sens de marche (F) et une nettoyeuse arrière (10) comprenant des outils (9) agissant sur le collet de betterave (K) dans le sens de marche permettent de traiter le produit de la récolte (E) pour qu'il soit prêt à être ramassé.

3. Machine à récolter des betteraves selon la revendication 1, **caractérisée en ce qu'**une hacheuse de feuilles (7) comprenant des outils (8) agissant sur le collet de betterave (K) dans le sens de marche (F) et une nettoyeuse arrière (10) comprenant des outils (9) agissant sur le collet de betterave (K) à l'encontre du sens de marche (F) permettent de traiter le produit de la récolte (E) pour qu'il soit prêt à être ramassé.

4. Machine à récolter des betteraves selon l'une quelconque des revendications 1 à 3, **caractérisée en ce que** les outils (8, 9) de la hacheuse de feuilles (7) et de la nettoyeuse arrière (10) permettent de former une unité fonctionnelle à deux rotors (P) s'étendant dans le sens transversal (Q, Q') de la machine (1) travaillant notamment sur plusieurs rangées devant son groupe d'arrachage (4).

5. Machine à récolter des betteraves selon la revendication 1 ou 2, **caractérisée en ce que** l'unité fonctionnelle (P) dans la zone située entre la hacheuse de feuilles (7) et la nettoyeuse arrière (10) permet de produire au moins par phases un débit de sortie (S) de parties de plante composé de deux courants partiels par le biais de ses sens de rotation inversés (A, B ; A', B') sur le collet de betterave (K).

6. Machine à récolter des betteraves selon l'une quelconque des revendications 1 à 5, **caractérisée en ce que** les parties de plante respectivement saisies par les deux outils (8, 9) peuvent être réunies dans le débit de sortie (S) comprenant un sens d'avance vertical au moins par zones.

7. Machine à récolter des betteraves selon l'une quelconque des revendications 1 à 6, **caractérisée en ce que** les outils (8, 9) tournant en sens inverse forment des surfaces actives partielles (W, W') respectives permettant de définir le nettoyage intégral du collet de betterave (K').

8. Machine à récolter des betteraves selon l'une quelconque des revendications 1 à 7, **caractérisée en ce que** les outils (8, 9) de l'unité fonctionnelle (P) peuvent être réglés seuls ou ensemble sur des positions de traitement respectives (guidage en profondeur 32).

9. Machine à récolter des betteraves selon la revendication 8, **caractérisée en ce que** les outils (8, 9) ou leurs axes de rotation (M, N) respectifs par rapport aux surfaces actives (W, W') respectives peuvent être réglés dans le sens horizontal et/ou vertical.

10. Machine à récolter des betteraves selon la revendication 8 ou 9, **caractérisée en ce que** les outils (8, 9) peuvent être commutés seuls ou ensemble dans leur sens de rotation.

11. Machine à récolter des betteraves selon l'une quelconque des revendications 1 à 10, **caractérisée en ce que** la hacheuse de feuilles (7) et la nettoyeuse arrière (10) sont disposées avec une distance axiale définissant les trajectoires se croisant en partie des outils (8, 9).

12. Machine à récolter des betteraves selon la revendication 11, **caractérisée en ce que** les outils (8, 9) sont actifs au moins par phases simultanément sur l'un des collets de betterave (K).

13. Machine à récolter des betteraves selon l'une quelconque des revendications 1 à 10, **caractérisée en ce que** la hacheuse de betteraves (7) et la nettoyeuse arrière (10) présentent une distance axiale (C) formant un espace de logement (G, G') pour le débit de sortie (S, S'').

14. Machine à récolter des betteraves selon la revendication 13, **caractérisée en ce que** l'espace de logement (G) situé entre les deux outils rotatifs (8, 9) permet de définir deux phases du traitement du collet de betterave (K).

15. Machine à récolter des betteraves selon l'une quelconque des revendications 1 à 14, **caractérisée en ce que** le débit de sortie (S, S') produit dans la zone de l'unité fonctionnelle (P) par les outils rotatifs (8, 9) peut être divisé.

16. Machine à récolter des betteraves selon l'une quelconque des revendications 1 à 15, **caractérisée en ce que** le débit de sortie (S, S') peut être évacué dans un but précis dans l'unité fonctionnelle (P) ou à l'extérieur de celle-ci.

17. Machine à récolter des betteraves selon la revendication 16, **caractérisée en ce que** le débit de sortie (S) à côté d'au moins une rangée de betteraves (R) peut être évacué (flèche S") de l'unité fonctionnelle (P).

18. Machine à récolter des betteraves selon la revendication 16, **caractérisée en ce que** seul le débit de sortie partiel produit par la nettoyeuse arrière (10) peut être évacué vers l'arrière et à côté de la rangée de betteraves (R).

19. Machine à récolter des betteraves selon l'une quelconque des revendications 16 à 18, **caractérisée en ce que** le débit de sortie (S) ou le débit de sortie partiel peut être déplacé jusqu'à l'arrière d'un dispositif à collet de betterave (6) placé à la suite de la nettoyeuse arrière (10).

20. Machine à récolter des betteraves selon l'une quelconque des revendications 1 à 16, **caractérisée en ce que** le débit de sortie (S) dans la zone de l'unité fonctionnelle (P) peut être introduit dans un transporteur transversal (12) et évacué de cette unité modulaire.

21. Machine à récolter des betteraves selon la revendication 20, **caractérisée en ce que** des transporteurs à bande ou à vis (14, 15) respectifs disposés au-dessus de la nettoyeuse arrière (10) servent de transporteurs transversaux (12).

22. Machine à récolter des betteraves selon la revendication 21, **caractérisée en ce qu'**au moins une unité de transfert (13) logeant le débit de sortie (S) est disposée sur le transporteur transversal (12).

23. Machine à récolter des betteraves selon l'une quelconque des revendications 1 à 22, **caractérisée en ce que** l'unité fonctionnelle (P) comprend un couvercle (T) s'étendant sensiblement au-dessus des deux unités modulaires rotatives (7, 10) et définissant plusieurs zones de recouvrement (20, 21).

24. Machine à récolter des betteraves selon la revendication 23, **caractérisée en ce que** le couvercle (T) est pourvu d'un capuchon pivotant (21, 21') s'insérant au moins par zones dans la trajectoire du débit de sortie (S, S'), sur lequel est disposé un capuchon directeur subséquent dans le sens de transport et pouvant être appliqué contre un capuchon de recouvrement (24, 24') chevauchant la zone du transporteur transversal (12).

25. Machine à récolter des betteraves selon la revendication 23 ou 24, **caractérisée en ce que** le couvercle (T) au moins dans la zone du capuchon pivotant (20, 21, 21') peut pivoter dans chaque position fonctionnelle.

26. Machine à récolter des betteraves selon l'une quelconque des revendications 23 à 25, **caractérisée en ce que** la nettoyeuse arrière (10) comprend dans la zone d'action immédiate de sa trajectoire définie par les outils rotatifs (9) au moins une tôle de guidage (17, 17').

27. Machine à récolter des betteraves selon l'une quelconque des revendications 1 à 26, **caractérisée en ce que** dans la zone d'action (flèche A, A', B, B') des deux outils (8, 9) ou du débit de sortie (S, S") produit respectivement par lesdits outils est disposé un module diviseur (30, 31) influençant ledit débit.

28. Machine à récolter des betteraves selon l'une quelconque des revendications 1 à 27, **caractérisée en ce que** l'unité fonctionnelle (P) comprend dans la zone de liaison à un cadre de support (2, 3) de la machine (1) un module de commande pouvant être utilisé pour des mouvements basculants et/ou pivotants du système.

29. Machine à récolter des betteraves selon la revendication 28, **caractérisée en ce que** l'unité fonctionnelle (P) et/ou les modules disposées sur celle-ci peuvent être déplacés dans le sens longitudinal et/ou transversal (Q) de la machine (1) au moyen du module de commande.

30. Machine à récolter des betteraves selon l'une quelconque des revendications 1 à 29, **caractérisée en ce que** des roues de guidage (35) côté avant ou arrière respectives permettent de régler la hauteur de travail de l'unité fonctionnelle (P) ou de ses outils rotatifs (8, 9).

31. Machine à récolter des betteraves selon l'une quelconque des revendications 1 à 30, **caractérisée en ce que** chaque outil avant (8) dans le sens de marche (F) permet de retirer 80% à 100%, de préférence 90% du volume des feuilles de betterave du collet de betterave (K).

32. Récolteuse ne comprenant que deux rotors tournant en sens inverse sur le collet de betterave au cours de leur phase opérationnelle et n'établissant qu'un débit de sortie commun selon l'une ou plusieurs des revendications 1 à 31, **caractérisée en ce que** les deux rotors forment une unité fonctionnelle (P) pouvant être utilisée indépendamment du processus d'arrachage comme un système autarcique destiné à hacher une feuille de betterave ou similaire.
